# EUROPÄISCHE PATENTSCHRIFT

(11) **EP 2 744 686 B1**
(45) Veröffentlichungstag und Bekanntmachung des Hinweises auf die Patenterteilung: **19.06.2019**
(21) Anmeldenummer: 12748230.5
(22) Anmeldetag: 17.08.2012
(51) Int. Cl.: F21S 41/19, B60Q 1/00, F21V 29/00, F21V 19/00, F21S 41/147, F21S 41/14, F21S 41/20, F21S 45/48, F21S 41/141

(54) **SCHEINWERFER FÜR EIN KRAFTFAHRZEUG MIT EINER AUSWECHSELBAREN KOMPLEXEN LICHTQUELLE**
HEADLIGHT FOR A MOTOR VEHICLE HAVING AN EXCHANGEABLE COMPLEX LIGHT SOURCE
PROJECTEUR POUR VÉHICULE AUTOMOBILE À SOURCE LUMINEUSE COMPLEXE INTERCHANGEABLE

(30) Priorität: 17.08.2011 DE 102011081062
(43) Veröffentlichungstag der Anmeldung: 25.06.2014
(73) Patentinhaber: Automotive Lighting Reutlingen GmbH, 72762 Reutlingen (DE)
(72) Erfinder: BRENDLE, Matthias, 72074 Tübingen (DE); HAMM, Michael, 72800 Eningen u. A. (DE); FADEL, Kamislav, 40237 Düsseldorf (DE)
(74) Vertreter: DREISS Patentanwälte PartG mbB
(86) Internationale Anmeldenummer: PCT/EP2012/066121
(87) Internationale Veröffentlichungsnummer: WO 2013/024159

(56) Entgegenhaltungen:
- EP-A1- 0 524 106
- EP-A2- 2 317 213
- DE-A1- 3 917 813
- DE-A1- 10 322 627
- DE-A1-102004 062 989
- DE-A1-102005 035 577
- DE-A1-102007 043 961
- DE-A1-102010 045 435
- FR-A1- 2 727 190
- FR-A1- 2 889 290
- JP-A- 2010 080 072
- US-A1- 2011 058 384
- US-A1- 2011 141 742

## Beschreibung

Die vorliegende Erfindung betrifft einen Scheinwerfer für ein Kraftfahrzeug mit einem Gehäuse, wenigstens einer Licht für eine Hauptfunktion des Scheinwerfers erzeugenden Halbleiterlichtquelle, einem die Halbleiterlichtquelle in thermischer Kopplung berührenden Kühlkörper, einem Licht der Halbleiterlichtquelle sammelnden und richtenden optischen System, einem mit dem Gehäuse mechanisch verbundenen Halterahmen, der die Halbleiterlichtquelle mit dem Kühlkörper und das optische System in dem Gehäuse hält, und mit einer Schnittstelle zwischen einem eine Komplexlichtquelle bildenden ersten Teil, der wenigstens die Halbleiterlichtquelle und den Kühlkörper umfasst, und einem zweiten Teil, der wenigstens den Halter umfasst, wobei der erste Teil an der Schnittstelle zerstörungsfrei lösbar mit dem zweiten Teil verbunden ist.

Ein solcher Scheinwerfer ist aus der US 7 712 948 B2 bekannt. Aus der DE 10 2007 043 961 A1 ist ein Scheinwerfer bekannt, der eine Komplexlichtquelle mit Halbleiterlichtquelle, Kühlkörper und integrierter Optik aufweist, wobei die Komplexlichtquelle mit Schrauben und damit lösbar mit einem Halterahmen verbunden ist.

Grundsätzlich wird bei Beleuchtungseinrichtungen für Kraftfahrzeuge zwischen Leuchten und Scheinwerfern unterschieden. Leuchten dienen dazu, anderen Verkehrsteilnehmern die Präsenz und/oder das Verhalten eines Kraftfahrzeuges und/oder Absichten seines Fahrers zu signalisieren. Beispiele von Leuchten sind Bremsleuchten, Blinkleuchten und Positionsleuchten, ohne dass dies als abschließende Aufzählung verstanden werden soll.

Scheinwerfer dienen dagegen dazu, den Fahrweg eines Kraftfahrzeuges aktiv so zu beleuchten, dass der Fahrer Hindernisse im Fahrweg rechtzeitig erkennt. Die dazu erzeugten Lichtverteilungen müssen regelkonform sein, um zum Beispiel eine Blendung anderer Verkehrsteilnehmer zu vermeiden. Beispiele von Lichtverteilungen, die von Scheinwerfern erzeugt werden, sind Abblendlicht- und Fernlicht-Lichtverteilungen. Auch hier gilt, dass diese Aufzählung nicht als abschließend zu verstehen ist.

Die Aufgabe oder Fähigkeit eines Bauteils zur Erzeugung von Lichtverteilungen, seien es Signallichtverteilungen oder Scheinwerferlichtverteilungen, wird auch als Lichtfunktion bezeichnet. In Bezug auf eine hauptsächlich als Scheinwerfer dienende Beleuchtungseinrichtung werden deren Scheinwerfer-Lichtfunktionen auch als Hauptfunktionen bezeichnet. Damit können sie von anderen Lichtfunktionen unterschieden werden, die von der gleichen Beleuchtungseinrichtung bereitgestellt werden, wenn diese zum Beispiel auch Signallichtfunktionen erfüllt.

Bei in Serie hergestellten Straßenkraftfahrzeugen werden Halbleiterlichtquellen erst seit 2008 für Scheinwerfer-Hauptfunktionen eingesetzt, während sie für Signallichtfunktionen bereits früher eingeführt werden konnten. Ein Grund für die Verzögerung ergab sich aus dem für Hauptfunktionen im Vergleich zu Signalfunktionen höheren Lichtstrombedarf.

Wegen der teilweise noch geringen Lichtströme, die von im Kraftfahrzeugbereich verwendeten Halbleiterlichtquellen erzeugt werden, fasst man für Scheinwerfer-Hauptfunktionen in der Regel mehrere Halbleiterlichtquellen zu Komplexlichtquellen zusammen, um so in der Summe die gewünschten hohen Lichtströme zu erhalten. Aufgrund der prinzipiell langen Lebensdauer des Licht emittierenden Halbleiters, wurde bisher wenig Wert auf die Reparaturmöglichkeiten von Scheinwerfern mit Halbleiter-Lichtquellen gelegt. Dies ergab sich auch daraus, dass zu Beginn der Entwicklung von Hochleistungs-Halbleiterlichtquellen nur wenige Daten zu Lebensdauer und Ausfallwahrscheinlichkeit dieser Lichtquellen zur Verfügung standen. Man ging zunächst davon aus, dass die Lebensdauer der Halbleiterlichtquellen für die Lebensdauer eines Kraftfahrzeuges mehr als ausreichend ist.

Im Gegensatz zu den Anfängen der Verwendung von Halbleiterlichtquellen für Scheinwerfer-Hauptfunktionen verfügt man mittlerweile über wesentlich mehr Erfahrung in Bezug auf die Haltbarkeit und die Ausfallwahrscheinlichkeit von für Scheinwerfer-Hauptfunktionen verwendete Halbleiterlichtquellen. Dies hat bei verschiedenen Fahrzeugherstellern den Wunsch nach austauschbaren Halbleiterlichtquellen geweckt. Gerade bei Fahrzeugen aus dem mittleren oder unteren Preissegment sollen auf diese Weise hohe Reparaturkosten bei Gebrauchtfahrzeugen vermieden werden, selbst wenn mit einer sehr hohen Wahrscheinlichkeit nur sehr wenige Fahrzeuge von diesen Ausfällen betroffen sein werden. Ohne auswechselbare Halbleiterlichtquellen müssten im Fehlerfall der gesamte Scheinwerfer getauscht werden, was bei geringem Fahrzeugzeitwert möglicherweise eine unverhältnismäßig hohe Investition erfordern würde.

Bei einem solchen Austausch treten jedoch Schwierigkeiten auf. Im Gegensatz zu herkömmlichen Halogenlampen haben Halbleiterlichtquellen wie LEDs zusätzlich zu den üblichen elektrischen und mechanischen Schnittstellen für eine Stromversorgung und eine Positionierung der Lichtquelle noch eine thermische Schnittstelle, über die eine beim Betrieb der Halbleiterlichtquelle im Halbleitermaterial anfallende Wärme abgeführt werden muss. In der Regel wird die LED hier über Wärmeleitkleber oder Wärmeleitpaste thermisch fest an einen Kühlkörper angekoppelt. Im Gegensatz zu den mechanischen und elektrischen Schnittstellen der LED lässt sich hier nur schwer eine lösbare Verbindung vorsehen.

Darüber hinaus besteht beim Wechsel der Lichtquelle die Gefahr, das optische System zu dejustieren und im schlimmsten Fall Gegenverkehrsblendung zu erzeugen.

Darüber hinaus benötigen Lichtmodule für Scheinwerferhauptfunktionen in der Regel eine horizontale und vertikale Grundeinstellung. Dadurch bedingt ist die Aufhängung der Lichtmodule aufwändig und verhindert in der Regel den Ausbau und Tausch der Lichtmodule zu Reparaturzwecken.

Aus diesem Grund bilden die heute eingesetzten Lichtmodule feste Einheiten, in denen die Leuchtmittel nach der bei der Herstellung erfolgenden Montage des Scheinwerfers nicht mehr zerstörungsfrei gewechselt werden können.

Um trotz dieser Hindernisse einen Wechsel von LED-Lichtquellen im Scheinwerfer zu ermöglichen sieht die eingangs genannte US 7 712 948 B2 ein Lichtquellenmodul vor, das wenigstens ein Licht emittierendes Element, insbesondere LEDs, Lichtleiter, kollimierende Elemente oder Linsenelemente aufweist. Darüber hinaus ist ein Halter für ein solches System, insbesondere in der Form eines Kraftfahrzeugscheinwerfers vorgesehen. Der Scheinwerfer weist darüber hinaus ein optisches System auf. Das Lichtquellenmodul ist dazu eingerichtet, an einer Referenzebene des optischen Systems positioniert zu werden, wobei es auch dazu eingerichtet ist, auf einfache Weise ersetzt werden zu können, insbesondere ohne dass dafür gelötete oder geschweißte Verbindungen benötigt werden.

Das bekannte Lichtquellenmodul weist in einer Reihe angeordnete Lichtaustrittsflächen vor. Eine Längskante dieser Reihenanordnung wird als optisches Element betrachtet und soll durch ein weiteres, als sekundär bezeichnetes optisches Element als Hell-Dunkel-Grenze einer Lichtverteilung des Scheinwerfers abgebildet werden. Dazu ist nach der US 7 712 948 B2 eine exakte und stabile Positionierung der Längskante in Bezug auf das weitere optische Element erforderlich. Für diese exakte Positionierung sind erste, zweite und dritte Referenzpunkte zwischen optischen Flächen (optical face) des Moduls und des optischen Systems des Scheinwerfers vorgesehen. Die Referenzpunkte sollen zum Beispiel aus Hartgummi, Kunststoff oder Metall bestehen. Eine Lagekorrektur soll durch Verändern der Dicke der Referenzpunkte ermöglicht werden. Als alternative Einstellmöglichkeit wird eine Lageveränderung der LEDs mit ihrem Kühlkörper relativ zu dem übrigen Lichtmodul genannt.

Von diesem Stand der Technik unterscheidet sich die vorliegende Erfindung durch die kennzeichnenden Merkmale des Anspruchs 1, nach denen der die Komplexlichtquelle bildende erste Teil über die Halbleiterlichtquelle und den Kühlkörper hinaus wenigstens ein Licht der Halbleiterlichtquelle sammelndes und richtendes optisches System aufweist und dadurch, dass der zweite Teil des Lichtmoduls wenigstens eine erste Lagerstruktur aufweist, und der erste Teil des Lichtmoduls wenigstens eine zweite Lagerstruktur aufweist, die zusammen ein Paar bilden, wobei die Lagerstrukturen so beschaffen sind, dass sie ineinander greifen, so dass der zweite Teil in den ersten Teil eingehängt und zerstörungsfrei aus dem ersten Teil ausgehängt werden kann, wobei das eingehängte Teil um eine Schwenkachse verschwenkt werden kann..

Durch diese Merkmale wird die bei der US 7 712 948 zwischen den Lichtaustrittsflächen der Halbleiterlichtquelle liegende Schnittstelle zwischen dem ersten auswechselbaren ersten Teil und dem in dem Scheinwerfer verbleibenden zweiten Teil verschoben.

Die verschobene Schnittstelle liegt dann nicht mehr zwischen den Lichtaustrittsflächen der Halbleiterlichtquellen und dem optischen System.

Zwischen den Lichtaustrittsflächen der Halbleiterlichtquellen und dem Eintritt in das im Lichtweg nachfolgende optische System auftretende Lageungenauigkeiten wirken sich stark auf die Qualität der resultierenden Lichtverteilung aus. Dies gilt insbesondere für Projektionssysteme, bei denen Primäroptiken mit kurzer Brennweite und engen Toleranzen verwendet werden, um ein Zwischenbild der Lichtaustrittsfläche der Halbleiterlichtquellen zu erzeugen, das dann von einer im weiteren Lichtweg nachfolgenden Projektionslinse als Lichtverteilung in das Vorfeld des Scheinwerfers projiziert wird.

Durch die erfindungsgemäße Verschiebung der Schnittstelle wird der Vorteil erzielt, dass beim Wechsel der Komplexlichtquelle keine Lageungenauigkeiten in der genannten sensiblen Schnittstelle zwischen den Lichtaustrittsflächen der Halbleiterlichtquelle und dem optischen System auftreten. Diese Schnittstelle ist vielmehr ein Teil der als Ganzes vormontierten Komplexlichtquelle. In der verschobenen Schnittstelle gegebenenfalls auftretende Lageungenauigkeiten wirken sich weniger stark auf die Qualität der letztlich vom Scheinwerfer erzeugten Lichtverteilung aus.

Durch die Erfindung wird letztlich ein mit Halbleiterlichtquellen für Hauptfunktionen ausgestatteter Scheinwerfer bereitgestellt, bei dem die Lichtquelle im Reparaturfall auf einfache Weise gewechselt werden kann. Insbesondere wird der Scheinwerfer beim Lichtquellenwechsel nicht dejustiert: Weder die Lage des Lichtmoduls im Scheinwerfer noch die Optik des Lichtmoduls selbst werden beim Tausch der Lichtquelle verändert. Ein weiterer wesentlicher Vorteil liegt darin, dass die Erfindung ein in einem ersten Schritt erfolgendes Einhängen und ein anschließend in einem zweiten Schritt durch eine Schwenkbewegung erfolgendes Verriegeln erlaubt. Beide Vorgänge können mit einer Hand manuell ausgeführt werden, was einen Wechsel der Komplexlichtquelle bei im Fahrzeug eingebautem Scheinwerfer ganz wesentlich erleichtert.

In einer Ausgestaltung weist der Scheinwerfer ein Gehäuse mit einer Serviceöffnung auf, die ab Werk offen ist, oder das dazu eingerichtet ist, im Reparaturfall in einem vorbestimmten Serviceöffnungsbereich aufgeschnitten zu werden. Dabei weist das Scheinwerfergehäuse Geometrien für die Befestigung einer Abdeckung auf, mit der die Serviceöffnung im Scheinwerfer nach dem Tausch der Komplexlichtquelle wieder verschließbar ist.

Bevorzugt ist auch, dass der erste Teil und der zweite Teil zusammen ein Lichtmodul bilden, das ein Projektionsmodul ist. Ferner ist bevorzugt, dass das Lichtmodul eine zur Verstärkung eines Helligkeitsgradienten an einer Hell-Dunkel-Grenze der Lichtverteilung eingerichtete Blende aufweist. Eine weitere Ausgestaltung zeichnet sich dadurch aus, dass die Blende eine Spiegelblende ist, die dazu eingerichtet ist, auf ihre Spiegelfläche einfallendes Licht der Halbleiterlichtquellen auf eine Sekundäroptik des Projektionsmoduls zu richten.

Bevorzugt ist auch, dass das optische System der Komplexlichtquelle alle optischen Bauelemente des Lichtmoduls umfasst. Ferner ist bevorzugt, dass das Lichtmodul ein Projektionsmodul ist und dass das optische System der Komplexlichtquelle eine Blende sowie mindestens eine Sekundäroptik umfasst. Eine weitere Ausgestaltung zeichnet sich dadurch aus, dass die Sekundäroptik eine Projektionslinse oder ein Parabolspiegel ist.

Bevorzugt ist auch, dass die Einzelteile der Komplexlichtquelle lösbar miteinander verbunden sind. Ferner ist bevorzugt, dass die Komplexlichtquelle ein elektronisches Bauelement aufweist, in dem Parameter der elektrischen Schnittstelle abgelegt sind, die über ein Steuergerät ausgelesen werden können. Bevorzugt ist auch, dass die Komplexlichtquelle mit einem Temperatursensor ausgestattet ist, insbesondere mit einem NTC oder PTC Widerstand, mit dem die Temperatur der Lichtquelle ermittelt werden kann.

Eine weitere Ausgestaltung zeichnet sich dadurch aus, dass die Komplexlichtquelle mit lösbaren Befestigungselementen, beispielsweise mit Schrauben, Klinken, Riegel- oder Renkverschlüssen mechanisch mit dem Lichtmodul verbindbar ist, so dass die Komplexlichtquelle zerstörungsfrei vom Lichtmodul getrennt und ausgetauscht werden kann.

Bevorzugt ist auch, dass die Klinken, Riegel- oder Renkverschlüsse mindestens eine Feder aufweisen, die einen Riegel oder eine andere Renkgeometrie in ein Gegenstück presst, in dem ein Riegelelement kraftschlüssig und/oder formschlüssig gehalten wird. Ferner ist bevorzugt, dass die Feder und des Riegelelement einstückig ausgeführt sind. Bevorzugt ist auch, dass das Riegelelement ein Teil der Komplexlichtquelle ist. Ferner ist bevorzugt, dass das Riegelelement ein Teil des zweiten Teils ist. Eine weitere Ausgestaltung zeichnet sich durch mehrere Federelemente aus, die dazu eingerichtet sind, das erste Teil und das zweite Teil spielfrei miteinander zu verspannen.

Weitere Merkmale und Vorteile ergeben sich aus den abhängigen Ansprüchen, der Beschreibung und den beigefügten Figuren.

Es versteht sich, dass die vorstehend genannten und die nachstehend noch zu erläuternden Merkmale nicht nur in der jeweils angegeben Kombination, sondern auch in anderen Kombinationen oder Alleinstellung verwendbar sind, ohne den Rahmen der vorliegenden Erfindung zu verlassen.

Ausführungsbeispiele der Erfindung sind in den Figuren dargestellt und werden in der nachfolgenden Beschreibung näher erläutert. Es zeigen, jeweils in schematischer Form:
Fig.1 ein Ausführungsbeispiel eines erfindungsgemäßen Scheinwerfers mit einem Lichtmodul;
Fig. 2 das Lichtmodul aus der Figur 1 mit vom zweiten Teil des Lichtmoduls gelöster, aber noch nicht vollständig abgehobenem ersten Teil;
Fig. 3 eine Ausgestaltung einer den ersten Teil des Lichtmoduls aus der Fig. 2 bildenden Komplexlichtquelle im vollständig vom zweiten Teil des Lichtmoduls abgehobenen Zustand;
Fig. 4 eine in ihre Elemente zerlegte Komplexlichtquelle aus der Fig. 3;
Fig. 5 eine Vorderansicht des Scheinwerfers mit dem Lichtmodul;
Fig. 6 eine Seitenansicht des Gegenstands der Fig. 5;
Fig. 7 eine bevorzugte Ausgestaltung des Lichtmoduls als Projektionsmodul in einer Schnittdarstellung;
Fig. 8 Schnittdarstellungen einer Komplexlichtquelle zusammen mit einer Schnittstelle zum zweiten Teil des Lichtmoduls; und
Fig. 9 Referenzgeometrien und Federn an der Komplexlichtquelle und einem Halterahmen.

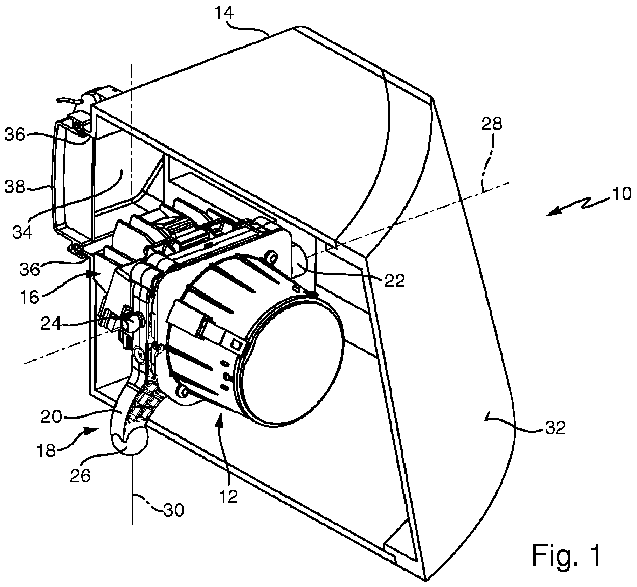

Fig.1 zeigt im Einzelnen ein Ausführungsbeispiel eines erfindungsgemäßen Scheinwerfers 10 mit einem Lichtmodul 12 in einem Gehäuse 14. Das Lichtmodul 12 weist einen auswechselbaren ersten Teil 16 und einen bei der Auswechslung des ersten Teils 16 in Bezug auf den Scheinwerfer 10 ortsfest im Gehäuse 14 verbleibenden zweiten Teil 18 auf.

Der erste Teil 16 ist eine Komplexlichtquelle, die wenigstens die Halbleiterlichtquelle und den Kühlkörper sowie wenigstens ein Licht der Halbleiterlichtquelle sammelndes und richtendes optisches System umfasst.

Der zweite Teil 18 umfasst wenigstens den mit dem Gehäuse 14 mechanisch verbundenen Halterahmen, der die Halbleiterlichtquelle mit dem Kühlkörper und das optische System in dem Gehäuse 14 hält. Der Halterahmen ist mit mindestens drei Haltepunkten mit dem Gehäuse 14 des Scheinwerfers 10 verbunden. Im dargestellten Ausführungsbeispiel erfolgt die Verbindung über Gelenke 22, 24, 26 mit Halterahmen-seitigen Lagern, so dass sich das Lichtmodul 12 im Scheinwerfer 10 um eine horizontale Achse 28 und eine vertikale Achse 30 schwenken lässt.

Das Gehäuse 14 weist eine transparente Abdeckscheibe 32 auf, die eine Lichtaustrittsöffnung des Gehäuses 14 abdeckt. Zusätzlich weist das Gehäuse 14 eine Serviceöffnung 34 oder einen Serviceöffnungsbereich auf. Die Serviceöffnung 34 ist von ihrer Größe und Lage her dazu eingerichtet, ein Einführen und Herausnehmen des ersten Teils eines Lichtmoduls 12 zu erlauben. Durch die Serviceöffnung 34, die bevorzugt in einer der transparenten Abdeckscheibe gegenüberliegenden Gehäuserückwand angeordnet ist, lässt sich somit die im Folgenden auch als Komplexlichtquelle 16 bezeichnete Komplexlichtquelle als erster Teil 16 des Lichtmoduls 12 wechseln, während der zweite Teil 18 des Lichtmoduls 12 mit dem Halterahmen 20 im Scheinwerfer 10 verbleibt.

Diese Serviceöffnung 34 für den Lichtquellenwechsel kann ab Werk offen sein oder erst im Reparaturfall in das Scheinwerfergehäuse 14 geschnitten werden. Im letzteren Fall weist das Gehäuse 14 an Stelle der bereits offenen Serviceöffnung 34 den Serviceöffnungsbereich auf. In jedem Fall weist das Scheinwerfergehäuse 14 aber Geometrien für die Befestigung einer Abdeckung 38 auf, mit der die Serviceöffnung 34 im Scheinwerfer 10 nach dem Tausch der Lichtquelle wieder verschlossen werden kann. Als Geometrien 36 kommen spezielle Befestigungselemente wie z.B. Schraubdome und/oder Haken und/oder ein Anschlagkragen in Frage, mit, beziehungsweise an denen eine Verschlusskappe als Abdeckung 38 befestigt werden kann. Die Verschlusskappe wird in einem solchen Fall nach der Reparatur zusätzlich am Scheinwerfergehäuse 14 angebracht.

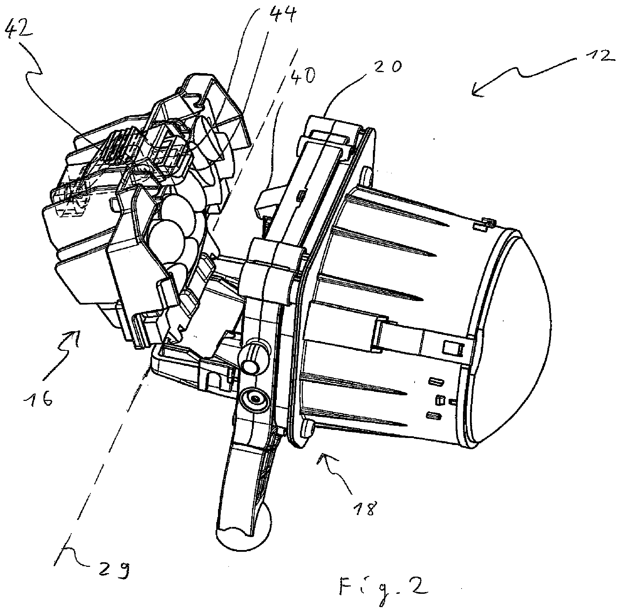

Figur 2 zeigt das Lichtmodul 12 aus der Figur 1 mit vom zweiten Teil 18 des Lichtmoduls 12 gelöster, aber noch nicht vollständig abgehobenem ersten Teil 16, also der Komplexlichtquelle 16.

Mit Hilfe von Positionier- oder Referenzgeometrien und zueinander komplementären Riegelelementen am Halterahmen 20 und der Komplexlichtquelle 16 kann der erste Teil 16 lösbar und präzise am zweiten Teil 18 des Lichtmoduls 12 befestigt werden. Unter einer Referenzgeometrie werden dabei zum Beispiel mechanische Anschläge und Führungen und starre Rastelemente verstanden. Als Riegelelement kommt zum Beispiel ein federbelastet bewegliches Rastelement in Frage.

In der dargestellten bevorzugten Ausgestaltung weist der zweite Teil 16 des Lichtmoduls wenigstens zwei erste Lagerstrukturen auf, und der erste Teil des Lichtmoduls weist wenigstens zwei zweite Lagerstrukturen auf. Je eine erste Lagerstruktur und eine zweite Lagerstruktur bilden ein Paar. Die ersten und die zweiten Lagerstrukturen sind so beschaffen, dass die Lagerstrukturen eines Paares ineinander greifen. Dies ermöglicht, dass der zweite Teil beim Verbinden (Lösen) in den ersten Teil eingehängt (ausgehängt) werden kann. Die ersten Lagerstrukturen sind längs einer geraden Linie angeordnet, die eine Schwenkachse 29 bildet. Dies ermöglicht, dass das eingehängte Teil um die Schwenkachse 29 herum verschwenkt werden kann. Die Schwenkachse 29 liegt bevorzugt parallel zur Schwenkachse 28. In einer bevorzugten Ausgestaltung werden die ersten Lagerstrukturen durch Abschnitte eines quer zur optischen Achse des Lichtmoduls liegenden Rippenprofils des zweiten Teils gebildet. Der zweite Teil des Lichtmoduls weist einseitig offene Ausnehmungen auf. Als Beispiel einer einseitig offenen Ausnehmung wird auf eine U-Form verwiesen. Beim Einhängen (Aushängen) des zweiten Teils in den (aus dem) ersten Teil erlaubt die Öffnung ein Einhängen (Aushängen) des Abschnitts des Rippenprofils in die (aus der) Ausnehmung. Die Lagerstrukturen sind bevorzugt so angeordnet, dass der eingehängte zweite Teil bei einer Orientierung im Raum, wie sich bei einer bestimmungsgemäßen Verwendung des Scheinwerfers in einem auf ebener Fahrbahn stehenden Fahrzeug ergibt, durch die Schwerkraft im eingehängten Zustand bleibt und insbesondere nicht herausfällt. Dies erleichtert die Montage, weil ein manuelles Halten unnötig ist. Der zweite Teil wird in einem ersten Schritt eingehängt und in einem zweiten Schritt durch eine Schwenkbewegung verriegelt. Beide Vorgänge können mit einer Hand ausgeführt werden.

In einer bevorzugten Ausgestaltung weist der erste Teil zusätzlich parallel zur optischen Achse des Lichtmoduls verlaufende Rippenprofile auf, und der zweite Teil weist dazu komplementäre einseitig offene Ausnehmungen auf, die die ersten Rippenprofile im eingehängten Zustand mit möglichst wenig Spiel umgreifen. Solche Paare von Ausnehmungen und Rippenprofilen erlauben einerseits eine Schwenkbewegung um die Achse 29 und fixieren andererseits die Lage des zweiten Teils zum ersten Teil in Richtung der Schwenkachse. Die parallel zur optischen Achse verlaufenden Rippenprofile und die quer zu optischen Achse liegenden Rippenprofile gehen bevorzugt ineinander über, so dass sich T-Profile ergeben, die über ihre Lager-und Führungsfunktionen hinaus noch die Funktion einer die mechanische Festigkeit des Lichtmoduls verstärkenden Struktur besitzen. In einer anderen Ausgestaltung ist jeweils nur ein Schwenklagerstruktur vorhanden. Bevorzugt ist auch, dass nur eine Führung parallel zur optischen Achse vorhanden ist.

Durch diese Ausgestaltungen wird ein Scheinwerfer mit den Merkmalen des Anspruchs 1 bereitgestellt, der Lagerstrukturen aufweist, die ein Einhängen des ersten Teils in den zweiten Teil und ein um eine Schwenkachse 29 herum erfolgendes Verschwenken des eingehängten Teils in eine Verriegelungsposition erlauben.

Insgesamt sind die Positionier- oder Referenzgeometrien und zueinander komplementären Riegelelementen am Halterahmen 20 und der Komplexlichtquelle 16 und insbesondere die Lagerstrukturen dazu eingerichtet, in der verriegelten Position so zusammenzuwirken, dass der zweite Teil präzise, fest und spielfrei im ersten Teil gehalten wird.

Zum Lösen der einen ersten Teil 16 des Lichtmoduls 12 bildenden Komplexlichtquelle 16 aus dem Lichtmodul 12 wird zunächst die Komplexlichtquelle 16 durch Drücken des federbelasteten Riegelelements 42 gelöst. Fig. 2 zeigt ein bewegliches Ende 44 des Riegelelementes in zwei Stellungen, um die Bewegungsmöglichkeit des beweglichen Endes 44 zu veranschaulichen.

Anschließend kann die Komplexlichtquelle 16 aus der Referenzgeometrie des Halterahmens 20 herausgeschwenkt und anschließend vom zweiten Teil 18 abgehoben und durch die Serviceöffnung aus dem Scheinwerfergehäuse herausgenommen werden.

Auf diese Weise erhält man eine einfach zu wechselnde Komplexlichtquelle 16, die wie eine Halogen- oder Xenon-Lampe im Schadensfall ausgewechselt werden kann. Gleichzeitig verbleibt der zweite Teil 18 des Lichtmoduls 12 ortsfest im Scheinwerfer.

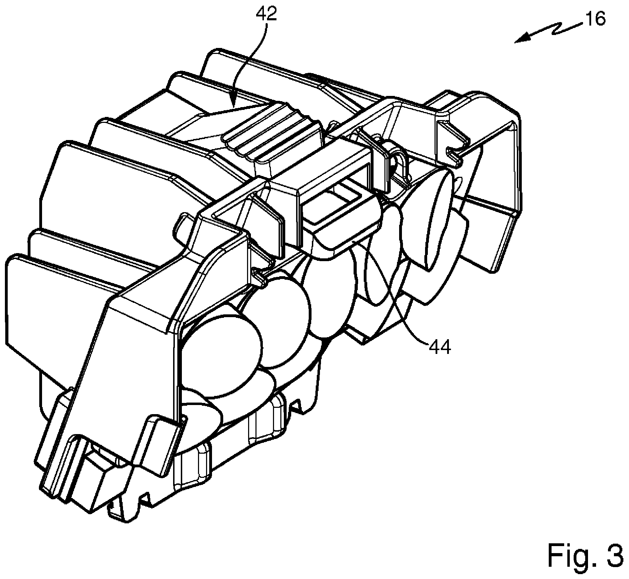

Fig. 3 zeigt eine Ausgestaltung einer den ersten Teil des Lichtmoduls aus der Fig. 2 bildenden Komplexlichtquelle 16 im vollständig vom zweiten Teil des Lichtmoduls abgehobenen Zustand.

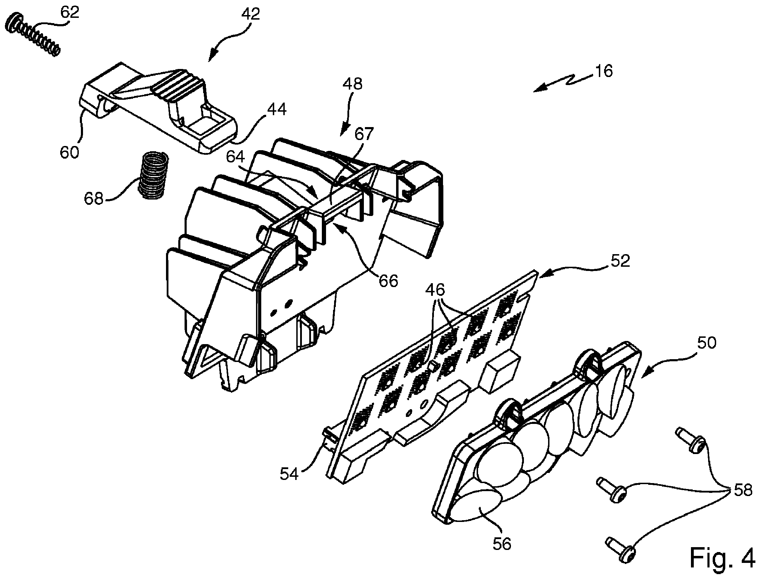

Fig. 4 zeigt eine in ihre Elemente zerlegte Komplexlichtquelle aus der Fig. 3.

Die Komplexlichtquelle umfasst wenigstens eine Halbleiterlichtquelle und den Kühlkörper und darüber hinaus wenigstens ein Licht der Halbleiterlichtquelle(n) 46 sammelndes und richtendes optisches System 50.

In der dargestellten Ausgestaltung sind n = 10 Halbleiterlichtquellen 46 in Form von LEDs (Leuchtdioden) oder Laserdioden auf einer Leiterplatte 52 oder Stromschiene angeordnet, die zur Steuerung und Versorgung der LEDs mit elektrischer Energie dient. Ein Steckverbinder 54 dient zum Herstellen einer lösbaren Steckverbindung zum elektrischen Anschluss der Leiterplatte oder Stromschiene an ein elektrisches Bordnetz des Kraftfahrzeugs. Die Zahl n kann von 10 abweichen und liegt bevorzugt zwischen 3 und 100.

Die Leiterplatte 52 ist im zusammengefügten Zustand der Komplexlichtquelle 16 fest und in gutem thermischen Kontakt, insbesondere in einem Wärme leitenden Kontakt, mit dem Kühlkörper 48 verbunden. Die Verbindung erfolgt in einer Ausgestaltung mit Hilfe eines für Wärme leitfähigen Klebers oder einer Wärmeleitpaste. Der Kühlkörper 48 besteht bevorzugt aus einem gut Wärme leitenden Metall wie Aluminium oder Kupfer. Bevorzugt ist, auch, dass der Kühlkörper 48 Strukturen aufweist, die seine Oberfläche vergrößern. Beispiele solche Strukturen sind Kühlrippen oder Kühlstifte. In einer bevorzugten Ausgestaltung wird ein einstückig zusammenhängender Kühlkörper 48 für sämtliche n Halbleiterquellen 46 verwendet. Die von den einzelnen Halbleiterlichtquellen 46 erzeugte Wärme verteilt sich dann gleichmäßig in dem gemeinsamen Kühlkörpervolumen. Lokale Überhitzungen werden dadurch wirksam vermieden.

Darüber hinaus weist die einen ersten Teil des Lichtmoduls 12 bildende Komplexlichtquelle 16 ein Licht der Halbleiterlichtquelle(n) sammelndes und richtendes optisches System 50 auf. In der dargestellten Ausgestaltung besteht dieses Licht sammelnde und richtende optische System 50 aus einem einstückigen transparenten Festkörper, in den für eine n Halbleiterlichtquellen aufweisende Komplexlichtquelle 16 n Vorsatzoptiken eingeformt sind, die das Licht in vorbestimmter Weise richten. Die Vorsatzoptiken sind in einer Ausgestaltung Nahfeldlinsen mit kurzer Brennweite, deren Brennpunkte in einer Petzval-Fläche einer im Lichtweg nachfolgenden Projektionslinse liegen.

Bei einem Projektionssystem formen die Vorsatzoptiken 56 das Licht der Halbleiterlichtquellen 46 zum Beispiel so, dass innerhalb des Lichtmoduls 12 eine Lichtverteilung in Form eines Urbildes der vom Lichtmodul 12 im Vorfeld des Scheinwerfers 10 zu erzeugenden Lichtverteilung entsteht. Dieses Urbild wird von einer im Lichtweg nachfolgenden Projektionslinse in das Vorfeld des Scheinwerfers 10 projiziert. In diesem Fall weisen die Vorsatzoptiken 56 kurze Brennweiten auf, was eine genaue Positionierung der Vorsatzoptiken 56 in Bezug auf die Halbleiterlichtquellen 46 erforderlich macht.

In der dargestellten Ausgestaltung wird der transparente Festkörper des optischen Systems 50 mit Schrauben am Kühlkörper 48 befestigt, wobei die Leiterplatte 52 zwischen dem transparenten Festkörper und dem Kühlkörper 48 eingespannt wird.

Wegen der Notwendigkeit einer guten thermische Anbindung, die zum Beispiel durch einen Wärmeleitkleber vermittelt wird, ist die Schnittstelle zwischen den Halbleiterlichtquellen 46 und dem Kühlkörper 48 nur schwer lösbar und daher nicht als Schnittstelle für einen Lichtquellenwechsel geeignet.

An der Schnittstelle zwischen den Halbleiterlichtquellen 46 und ihren Vorsatzoptiken 56 ist wegen der kleinen Brennweiten und der dadurch bedingten engen Lagetoleranzen damit zu rechnen, dass bei kleinen Lageungenauigkeiten große Beeinträchtigungen der Qualität der letztlich zu erzeugenden Lichtverteilung auftreten.

Es ist ein großer Vorteil der hier vorgestellten Erfindung, dass die Schnittstelle zwischen dem ersten Teil 16 des Lichtmoduls 12 und dem zweiten Teil 18 des Lichtmoduls 12 gerade nicht zwischen den Halbleiterlichtquellen 46 und dem Kühlkörper 48 und auch nicht zwischen den Halbleiterlichtquellen 46 und einem Licht der Halbleiterlichtquelle sammelnden und richtenden optischen System 50 liegt. Da diese beiden kritischen Schnittstellen bei der vorliegenden Erfindung ein Teil der

Komplexlichtquelle 16 sind, müssen die zu diesen kritischen Schnittstellen zugehörigen Verbindungen beim Lichtquellenwechsel nicht getrennt werden.

In der Ausgestaltung, die in den Figuren 3 und 4 dargestellt ist, weist die Komplexlichtquelle 16 ein Riegelelement auf. Das Riegelelement 42 besitzt ein festes Ende 60, das mit einer Schraube 62 an dem Kühlkörper 48 befestigt wird, und ein bewegliches Ende 44, das in einer Führung 64 des Kühlkörpers 48 elastisch beweglich geführt wird. Die Führung 64 weist eine zur Leiterplatte 52 offene Ausnehmung 66 auf, die dazu eingerichtet ist, eine Bewegung des beweglichen Endes 44 des Riegelelements 42 zu führen und durch einen Anschlag 67 zu begrenzen. Eine Feder 68 wird zwischen dem Kühlkörper 48 und dem Riegelelement 42 angeordnet, wobei die Anordnung so erfolgt, dass die Feder 68 das bewegliche Ende 44 des Riegelelements 42 gegen den Anschlag 67 drückt.

Vorzugsweise werden die Einzelteile der Komplexlichtquelle 16 ihrerseits lösbar miteinander verbunden, so dass im Servicefall auch Einzelteile der Komplexlichtquelle 16 (im ausgebauten Zustand der Komplexlichtquelle 16) getauscht werden können.

Die Komplexlichtquelle 16 weist in einer weiteren Ausgestaltung zusätzlich ein elektronisches Bauelement auf, in dem Parameter der elektrischen Schnittstelle abgelegt sind und die über ein Steuergerät ausgelesen werden können. Solche Parameter sind zum Beispiel die je nach Herstellungscharge der Halbleiterlichtquellen 46 einzuhaltenden Werte des Betriebsstroms und der Betriebsspannung der Halbleiterlichtquellen 46. Im einfachsten Fall ist das elektronische Bauelement ein elektrischer Widerstand. Mit jeweils einem solchen Kodierwiderstand wird ein Parameterwert gespeichert.

Als Alternative zu Kodierwiderständen sehen weitere Ausgestaltungen programmierbare elektronische Speicherelemente vor, die über einen Datenbus ausgelesen werden können. Auf diese Weise kann sichergestellt werden, dass bei einem Austausch der Komplexlichtquelle 16 auch die Halbleiterlichtquellen 46 der neuen Komplexlichtquelle 16, die möglicherweise veränderte Betriebsspannungen und/oder Betriebsströme erfordern, mit korrekt angepassten Werten betrieben werden können.

Ein weiteres Beispiel eines zusätzlichen Bestandteils der Komplexlichtquelle ist ein NTC (negative temperature coefficient) oder PTC (positive temperature coefficient), also ein von der Temperatur abhängiger Widerstand, mit dem die Temperatur der Lichtquelle ermittelt werden kann.

Bevorzugt ist auch, dass die Komplexlichtquelle 16 die komplette Elektronik zur Ansteuerung der Halbleiterlichtquellen zum Betrieb der Halbleiterlichtquellen am Bordnetz des Kraftfahrzeugs aufweist. Diese Elektronik versorgt die Halbleiterlichtquelle(n) insbesondere 46 mit einem geregelten Betriebsstrom und/oder einer geregelten Betriebsspannung. Diese Elektronik wird bevorzugt ihrerseits von einem Steuergerät gesteuert, das nicht Bestandteil der Komplexlichtquelle ist und das über einen Fahrzeugbus und Steckverbinder mit der Elektronik der Komplexlichtquelle kommuniziert und über das in einer Ausgestaltung auch die Versorgung der Elektronik der Komplexlichtquelle mit elektrischer Energie erfolgt. Das Steuergerät kann innerhalb oder außerhalb des Scheinwerfers im Fahrzeug angeordnet sein.

Die Figuren 1 bis 4 zeigen damit insbesondere einen Scheinwerfer 10 für ein Kraftfahrzeug mit einem Gehäuse 14, wenigstens einer Licht für eine Hauptfunktion des Scheinwerfers 10 erzeugenden Halbleiterlichtquelle 46, einem die Halbleiterlichtquelle 46 in thermischer Kopplung berührenden Kühlkörper 48, einem Licht der Halbleiterlichtquelle(n) 46 sammelnden und richtenden optischen System 50, einem mit dem Gehäuse 14 mechanisch verbundenen Halterahmen 20, der die Halbleiterlichtquelle(n) 46 mit dem Kühlkörper 48 und das optische System 50 in dem Gehäuse 14 hält, und mit einer Schnittstelle zwischen einem eine Komplexlichtquelle 16 bildenden ersten Teil, der wenigstens die Halbleiterlichtquelle(n) 46 und den Kühlkörper 48 umfasst, und einem zweiten Teil 18, der wenigstens den Halterahmen 20 umfasst. Dabei ist der erste Teil 16 an der Schnittstelle zerstörungsfrei lösbar mit dem zweiten Teil 18 verbunden, und der die Komplexlichtquelle 16 bildende erste Teil 16 weist über die Halbleiterlichtquelle(n) 46 und den Kühlkörper 48 hinaus wenigstens ein Licht der Halbleiterlichtquelle(n) 46 sammelndes und richtendes optisches System 50 auf.

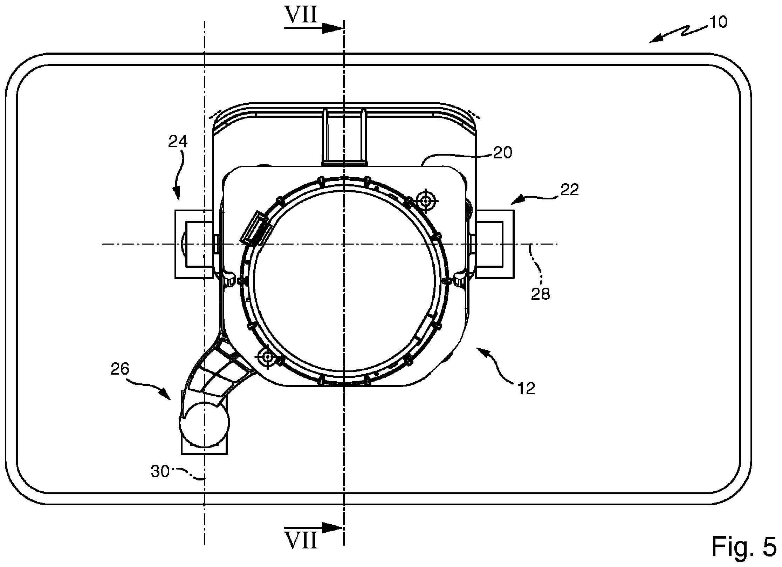

Fig. 5 zeigt eine Vorderansicht des Scheinwerfers 10 mit dem Lichtmodul 12, also eine Ansicht aus einer Richtung, die antiparallel zu einer Hauptabstrahlrichtung des Lichtmoduls 12 ist. Die Fig. 5 zeigt insbesondere eine erste Achse 28 und eine zweite Achse 30, um die das Lichtmodul 12 jeweils geschwenkt werden kann. Die erste Achse 28 ist in einem ersten Lager oder Gelenk 22 und in einem zweiten Lager oder Gelenk 24 schwenkbar gelagert. Die zweite Achse 30 ist in dem zweiten Lager oder Gelenk 24 und einem dritten Lager oder Gelenk 26 drehbar gelagert. Das zweite Lager 24 ist bevorzugt ein Kugelgelenk, in dem sich die erste Achse 28 und die zweite Achse 30 kreuzen.

Im eingebauten Zustand ist die erste Achse bevorzugt horizontal und damit in etwa parallel zur Fahrbahnoberfläche ausgerichtet. Die Schwenkbarkeit um die erste Achse erlaubt eine Grundeinstellung der Leuchtweite und zum Beispiel eine Einstellung der vertikalen Position einer horizontalen Hell-Dunkel-Grenze und/oder eine automatische Leuchtweitenregelung des Lichtmoduls 12.

Die zweite Achse 30 ist in einem solchen Winkel zur Horizontalen angeordnet, dass eine Schwenkbarkeit um die zweite Achse 30 herum eine Grundeinstellung der Hauptabstrahlrichtung des Lichtmoduls 12 in horizontaler Richtung und/oder eine Kurvenlichtfunktion erlaubt, bei der das Lichtmodul 12 bei einer Kurvenfahrt automatisch so geschwenkt wird, dass sein Lichtbündel bei einer Linkskurve nach links und bei einer Rechtskurve nach rechts geschwenkt wird. Bei eingebautem Scheinwerfer 10 wird die zweite Achse 30 daher im Wesentlichen, wenn auch nicht notwendigerweise exakt, vertikal ausgerichtet sein.

Der Halterahmen 20 des Lichtmoduls 12, der dabei jeweils vertikal oder horizontal geschwenkt wird, gehört dabei zum zweiten Teil 18 des Lichtmoduls 12, der bei einem Wechsel der Komplexlichtquelle 16 in Bezug auf den Scheinwerfer 10 ortsfest im Gehäuse 14 verbleibt. Daraus ergibt sich der Vorteil, dass ein Wechsel der Komplexlichtquelle 16 nicht mit einer Veränderung der Grundeinstellung des Lichtmoduls 12 verbunden ist und auch keine Trennung einer Kinematik zur Leuchtweitenregelung oder Kurvenlichtfunktion erfordert.

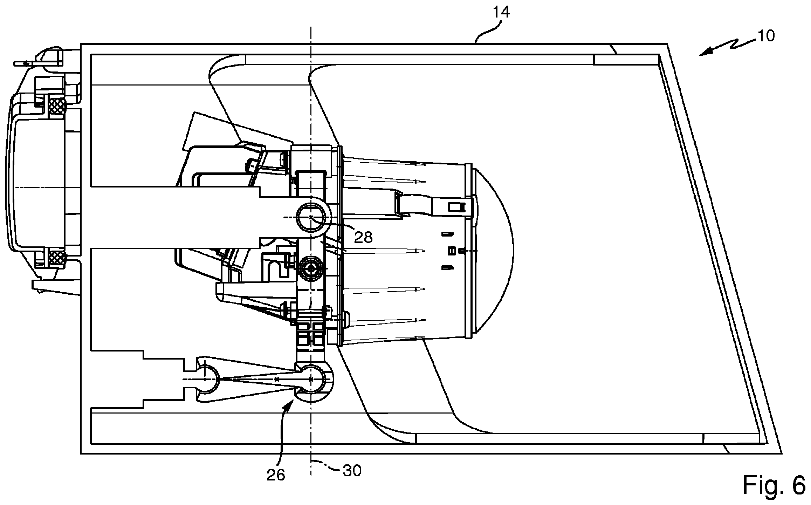

Die Figur 6 zeigt eine Seitenansicht des (aufgeschnittenen)Scheinwerfers 10 aus der Fig.5 und dient, in Verbindung mit der Fig. 5, insbesondere zur Verdeutlichung der Lagerung der ersten Achse 28 und der zweiten Achse 30. Die Verschwenkung um die zweite (vertikale) Achse 30 erfolgt dadurch, dass das in der Fig. 6 verdeckte erste Lager 22 durch einen dafür eingerichteten Stellantrieb um die zweite Achse 30 herum geschwenkt wird. Die Verschwenkung um die erste (horizontale) Achse 28 erfolgt dadurch, dass das dritte Lager durch einen dazu eingerichteten weiteren Stellantrieb um die erste Achse 28 herum geschwenkt wird. Das erste Lager 22 und das dritte Lager 26 sind daher im Gehäuse 14 beweglich, während das zweite Lager 24 einen in Bezug auf das Gehäuse 14 ortsfesten Haltepunkt bildet. Die Figuren 5 und 6 verdeutlichen damit insbesondere, wie die Haltepunkte des Lichtmoduls 12 im Gehäuse 14 in einer bevorzugten Ausgestaltung ausgeführt sind, so dass sich das Lichtmodul 12 im Scheinwerfer 10 um eine erste, bevorzugt horizontale Achse 28, und eine zweite, bevorzugt vertikale Achse 30, schwenken lässt.

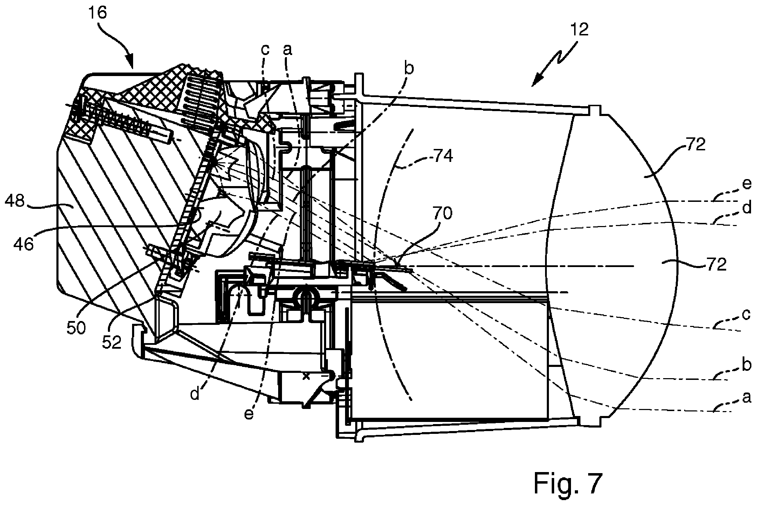

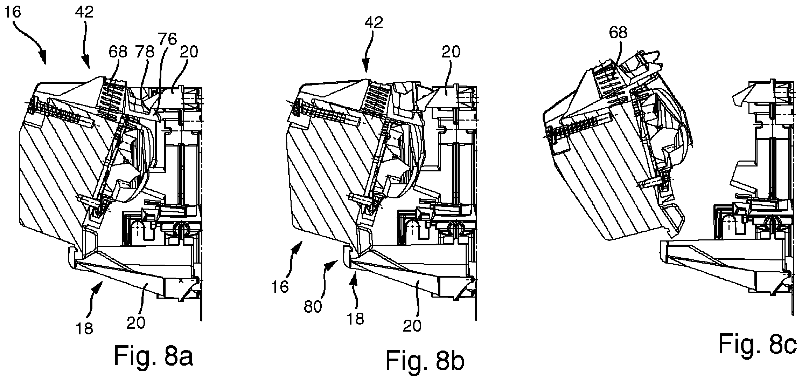

Fig. 7 zeigt eine bevorzugte Ausgestaltung des Lichtmoduls 12 als Projektionsmodul längs einer Schnittlinie VII-VII in Fig. 5. Projektionsmodule als solche sind per se bekannt. Das Projektionsmodul der Fig. 8 weist insbesondere Halbleiterlichtquellen 46, eine Primäroptik als optisches System 50, eine Spiegelblende 70 und eine Sekundäroptik 72 auf. Die Halbleiterlichtquellen 46 sind hier auf eine Leiterplatte 52 aufgelötet. Diese Leiterplatte 52 bildet zusammen mit der Primäroptik, die hier als Array aus je einer Nahfeldlinse für jede Halbleiterlichtquelle 46 realisiert ist, dem Kühlkörper 48 und der Verriegelung die Komplexlichtquelle 16.

Das von den Halbleiterlichtquellen der Komplexlichtquelle emittierte Licht, vom dem einzelne Strahlen a, b, c, d, e dargestellt sind, wird von den Nahfeldlinsen der Primäroptik zu einer Lichtverteilung in einer gewölbten Fläche geformt, die etwa der Petzvalfläche 74 der Projektionslinse entspricht, die hier die Sekundäroptik 72 bildet. Die Blendenebene berührt ungefähr die Petzvalfläche der Projektionslinse. Die Petzvalfläche ist dabei eine gewölbte Fläche im Objektraum einer Projektionslinse, die von der Projektionslinse in eine ebene Fläche im Bildraum der Projektionslinse abgebildet wird. In der Fig. 7 befindet sich der Objektraum links und damit im Lichtweg vor der Projektionslinse, während sich der Bildraum rechts und damit im Lichtweg hinter der Projektionslinse befindet.

Die Spiegelblende 70 teilt den Strahlengang der Primäroptik in einen reflektierten Anteil (Strahlen e, d) und einen ohne Reflexion an der Blende vorbei propagierenden Anteil (Strahlen a, b, c). Beide Anteile werden durch die Spiegelkante in der Blendenebene so begrenzt, dass eine Lichtverteilung mit scharfer Hell-Dunkel-Grenze erzeugt wird. Diese Lichtverteilung wird durch die Projektionslinse auf die Straße projiziert. Dabei wird durch die Spiegelblende 70 auch der zunächst abgeschattete Teil (Strahlen e, d) des Lichtes auf die Sekundäroptik 72 reflektiert, so dass auch dieser Teil in den hellen Bereich der resultierenden Lichtverteilung gebrochen wird und damit nicht verloren geht.

Das optische System des Lichtmoduls 12 besteht hier aus der Komplexlichtquelle 16 mit einer Primäroptik, die in einer Zwischenbildfläche eine Lichtverteilung erzeugt. Eine Sekundäroptik, deren Petzvalfläche 74 ungefähr in der Zwischenbildfläche liegt, projiziert die Lichtverteilung des Zwischenbildes auf die Straße. Die Sekundäroptik 72 besteht aus hier aus einer Projektionslinse. Sie kann aber in einer anderen Ausgestaltung auch mindestens einen paraboloiden Reflektor aufweisen.

Die Blende 70 dient zur Erzeugung von Abblendlicht-Lichtverteilungen, die eine Hell-Dunkel-Grenze (HDG) aufweisen. Die Blende wird in Bezug auf die Petzvalfläche der Sekundäroptik so angeordnet, dass die Blende einen Teil des von der Primäroptik gesammelten und gerichteten Lichtes der Halbleiterlichtquellen abschattet oder reflektiert, wobei der abgeschattete oder reflektierte Teil des Lichtes nicht durch die Sekundäroptik hindurchtritt oder in einem anderen Strahlengang durch die Sekundäroptik hindurchtritt als es ohne Blende der Fall wäre. Auf diese Weise kann der Beleuchtungsstärkegradient an der HDG erhöht und die Reichweite des Scheinwerfers verbessert werden.

Wie bereits erwähnt wurde, zeichnet sich die Komplexlichtquelle 16 dadurch aus, dass sie neben dem Kühlkörper 48, der Leiterplatte 52 und Halbleiterlichtquellen 46 ein Licht der Halbleiterlichtquelle(n) 46 sammelndes und richtendes optisches System 50 aufweist. Dieses optische System ist in einer Ausgestaltung auf die Primäroptik eines Projektionsystems beschränkt.

In einer alternativen Ausgestaltung umfasst das optische System 50 jedoch nicht nur die Primäroptik, sondern alle optischen Bauelemente des Lichtmoduls 12. Bei einem Projektionslichtmodul sind dies neben dem Primäroptikarray mindestens noch eine Blende bzw. ein Spiegel 70 sowie mindestens eine Sekundäroptik 72, wobei diese als Projektionslinse oder als Parabolspiegel verwirklicht ist. Wesentlich ist auch hier dass der im Gehäuse verbleibende zweite Teil 18 des Lichtmoduls 12 den Halterahmen 20 mit Aufhängung und Grundeinstellung umfasst.

Eine bevorzugte Ausgestaltung zeichnet sich dadurch aus, dass für die Sekundäroptik und die Blende am Halterahmen auch eine mechanische Justiermöglichkeit vorgesehen ist, mit der die Sekundäroptik oder die Blende in Richtung der optischen Achse verstellt werden können.

Die Fig. 8 zeigt Schnittdarstellungen der Komplexlichtquelle zusammen mit der Schnittstelle zum zweiten Teil des Lichtmoduls in verschiedenen Stadien bei einem Wechsel der Komplexlichtquelle. Fig. 8 zeigt dabei eine Ausgestaltung, bei der das Riegelelement 42 ein Teil der Komplexlichtquelle 16 ist. Das Riegelelement kann aber auch ein Teil des Halterahmens 20 sein. Dabei zeigt die Figur 8 insbesondere das Riegelelement 42 in verschiedenen Stellungen.

In der Fig. 8a hintergreift ein Rasthaken 76 des Riegelelements 42 eine komplementäre Rastkante 78 des zweiten Teils 18. Dabei wird das Riegelelement 42 durch die Feder 68 in dieser verrasteten Stellung gehalten. Die Komplexlichtquelle befindet sich in einem Zustand, in dem sie in das zweite Teil 18 des Lichtmoduls 12 eingerastet ist. Die Feder 68 ist dabei vorgespannt. Die Komplexlichtquelle 16 ist mit dem zweiten Teil 18 des Lichtmoduls verriegelt. Im verriegelten Zustand drückt das federbelastete Riegelelement 42 die Komplexlichtquelle 16 nach unten auf Referenzanschläge des zweiten Teils 18 des Lichtmoduls und verspannt die Verbindung in vertikaler Richtung spielfrei. Da zum Lösen der Verbindung die Feder 68 stärker gespannt werden muss, stellt der verriegelte Zustand eine energetisch stabile Position dar, die nur durch Energiezufuhr von außen gelöst werden kann.

Fig. 8b zeigt das federbelastete Riegelelement in einer zum Lösen der Komplexlichtquelle nach unten gedrückten Stellung, in der die Komplexlichtquelle 16 aus dem Halterahmen 20 des Lichtmoduls heraus geschwenkt und entnommen werden kann. In der Fig. 8b ist die Feder 68 maximal gespannt. Dann wird der Rasthaken 76 des ersten Teils 16 des Lichtmoduls nicht mehr hinter der Rastkante des zweiten Teils 18 des Lichtmoduls gehalten. Die Komplexlichtquelle 16 ist entriegelt. Der erste Teil 16 des Lichtmoduls kann jetzt aus seiner Raststellung heraus geschwenkt werden. Die Schwenkbewegung erfolgt dabei um ein Drehgelenk 80 herum, das durch ineinander greifende Vorsprünge des ersten Teils 16 und des zweiten Teils 18 gebildet wird.

Fig. 8c zeigt die Komplexlichtquelle 16 in einem von dem zweiten Teil 18 des Lichtmoduls vollständig gelösten Zustand. In diesem Zustand ist eine Entnahme der Komplexlichtquelle 16 aus dem Gehäuse 14 möglich. Die Feder 68 ist maximal entspannt.

In der beschriebenen Ausgestaltung sind Feder 68 und das Riegelelement 42 als separate Bauteile verwirklicht. In einer anderen Ausgestaltung sind sie als einstückig zusammenhängendes Bauteil ausgeführt, beispielsweise als Formfeder, insbesondere als Formdrahtfeder.

Fig. 8 zeigt auch eine Ausgestaltung, bei der das Riegelelement ein Teil der Komplexlichtquelle ist. In einer alternativen Ausgestaltung ist das federbelastete Riegelelement ein Teil des Halterahmens.

Darüber hinaus kann die Verriegelungsgeometrie auch starr an die Komplexlichtquelle und den zweiten Teil des Lichtmoduls angeformt sein, so dass die Komplexlichtquelle als Ganzes die Verriegelungsbewegung ausführen muss und das Federelement somit die Komplexlichtquelle als Ganzes in die Rastgeometrie am Halter drückt. Ähnliche Lösungen werden beispielsweise bei Bajonettverbindungen von Lampen verwendet, bei denen die gesamte Lampe verschoben und verdreht werden muss, um die beteiligten Bauteile miteinander zu verbinden oder voneinander zu lösen.

Losgelöst von der beschriebenen konkreten Ausgestaltung zeichnen sich weitere Ausgestaltungen dadurch aus, dass die Komplexlichtquelle mit lösbaren Befestigungselementen, beispielsweise mit Schrauben, Klinken, Riegel- oder Renkverschlüssen mechanisch lösbar mit dem zweiten Teil des Lichtmoduls verbindbar ist, so dass die Komplexlichtquelle zerstörungsfrei vom Lichtmodul getrennt und ausgetauscht werden kann.

Klinken, Riegel- oder Renkverschlüsse verfügen bevorzugt über mindestens eine Feder, die den Riegel oder eine andere Renkgeometrie in ein Gegenstück presst, in dem der Riegel formschlüssig gehalten wird. Zum Lösen der Verbindung muss die Feder gespannt/belastet werden, damit der Riegel aus dem Gegenstück gehoben und die Verbindung gelöst werden kann. Der verriegelte Zustand ist somit eine energetisch stabile Position,

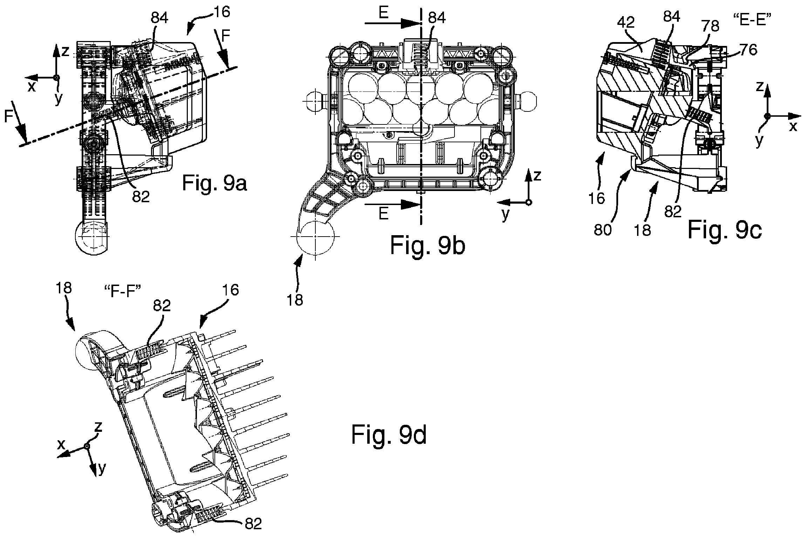

Fig. 9 dient dazu, Referenzgeometrien an der Komplexlichtquelle, also dem ersten Teil des Lichtmoduls, und dem Halterahmen als wesentlichem Bestandteil des zweiten Teils des Lichtmoduls zu veranschaulichen. Mithilfe der Referenzgeometrien wird die Komplexlichtquelle statisch bestimmt im Lichtmodul positioniert. Unter einer solchen Geometrie wird hier eine äußere Form eines Festkörpers verstanden, die einen Formschluss oder Kraftschluss erlaubt. Referenzgeometrien sind in diesem Zusammenhang ineinander greifende Geometrien wie Zentrierstifte, Zentrierlöcher, Zentriernuten oder Zentrierrippen, mit denen die Komplexlichtquelle mit Spielpassungen, Übergangspassungen oder leichten Presspassungen positioniert wird. Es können aber auch einfache Anlageflächen am Halterahmen genutzt werden, gegen die die Komplexlichtquelle mit Federkraft gepresst wird.

Die Federelemente für Verriegelung oder Spielausgleich werden bevorzugt als metallische Federn ausgeführt. Es sind aber auch Elastomerfedern, insbesondere Elastomer-Druckelemente denkbar oder angeformte Federelemente aus Kunststoff. Insofern ist in dieser Anmeldung immer dann, wenn eine Feder genannt wird, ein elastisches Element gemeint, wenn nicht speziell auf eine spezielle Feder, sei es eine Metallfeder oder eine Formfeder oder dergleichen hingewiesen wird.

Für die spielfreie Verspannung von erstem Teil und zweitem Teil des Lichtmoduls werden bevorzugt mindestens zwei Federn verwendet, beipielsweise eine erste Feder 82 (oder einer Anordnung mehrerer, in gleicher Richtung wirkender erster Federn 82), die die Komplexlichtquelle 16 gegen drei Auflagen in der Y-Z-Ebene drückt und damit die folgenden Freiheitsgrade festlegt: Rotation um Y, Rotation um Z und Translation in X-Richtung. Eine weitere Feder 84 kann nun die Komplexlichtquelle 16 in Z-Richtung gegen zwei weitere Anschläge in der X-Y-Ebene drücken, um die Rotation um die X-Achse und die Translation in Y- und Z-Richtung zu unterbinden.

Je nach Wahl der Auflageflächen kann es sinnvoll sein, einen der 6 Freiheitsgrade lediglich mit einer Spielpassung auf kleine Werte zu begrenzen. Hier bieten sich vor allem die Rotation um die X-Achse und die Translation in Y-Richtung an, da hier die Anforderungen an die Positioniergenauigkeit meist geringer sind. Die Verschiebung entlang der Y-Achse kann dann beispielsweise durch eine enge Spielpassung auf kleine Werte begrenzt werden. Vergleiche Fig. 9b.

Soll eine Federkraft die Lichtquelle 16 gleichzeitig gegen mehrere Anschläge drücken, ist es notwendig, dass die Federkraft zwischen den Auflagepunkten auf die Lichtquelle wirkt. Kann dort aus konstruktiven Gründen keine Feder positioniert werden, weil der betreffende Ort beispielsweise bereits durch andere Bauteile belegt ist, kann die jeweilige Federkraft auch auf zwei oder mehr Federn aufgeteilt werden. In diesem Fall muss lediglich die Resultierende der Federkräfte innerhalb der vorgesehenen Auflagepunkte liegen, wie es aus der Fig. 9d ersichtlich ist, die zwei erste Federn zeigt.

Es bietet sich an, die für die Verriegelung dienende Feder 68 in der Fig. 8 gleichzeitig als weitere Feder 84 für den Spielausgleich zu verwenden. In diesem Fall muss die weitere Feder 84 im verriegelten Zustand eine Vorspannkraft aufweisen, mit der die Komplexlichtquelle 16 gegen einen oder mehrere Anschläge gerückt werden kann. Dies ist beim Gegenstand der Figur 9 der Fall, weil dort die weitere Feder 84 den Rasthaken des Riegelelements 42 gegen einen von dem zweiten Teil 18 in Form einer Rastkante 78 gebildeten oberen Anschlag drückt, wobei die weitere Feder 84 gleichzeitig auch das erste Teil 16 in einen untere Haltegeometrie des zweiten Teils 18 drückt. Die untere Haltegeometrie stellt dabei einen Halterahmen-seitigen Teil des Drehgelenks 80 dar, um das die Komplexlichtquelle beim Herausnehmen aus dem Halterahmen 20 des zweiten Teils 18 herum geschwenkt wird.

Die resultierenden Federkräfte betragen bevorzugt ein Mehrfaches der Gewichtskraft der Komplexlichtquelle 16, um eine spielfreie Halterung auch beim Auftreten von Beschleunigungskräften zu gewährleisten, wie sie etwa beim Fahren auf einer schlechten Fahrbahn auftreten.

Insgesamt zeigt die Figur 9 ein Beispiel für die Positionierung und spielfreie Verspannung der Komplexlichtquelle: Die Feder der Verriegelung, also die weitere Feder 84, drückt die Komplexlichtquelle 16 in Z-Richtung gegen zwei Anschläge: Als Folge ergibt sich eine Spielfreiheit in Z-Richtung und eine Eliminierung eines Verdrehspiels um die X-Achse. Eine weitere Federkraft, die sich aus den Federkräften der ersten Federn 82 zusammensetzt, drückt die Komplexlichtquelle 16 ungefähr in X-Richtung gegen drei Anschläge. Daraus ergibt sich eine Spielfreiheit in X-Richtung sowie eine Eliminierung eines Verdrehspiels um die Y-Achse und um die Z-Achse. Der letzte Freiheitsgrad wird hier durch eine Spielpassung eliminiert, die in Y-Richtung nur ein geringes Spiel zulässt. Alternativ könnte man die Anschlagflächen für die Z-Richtung spiegelsymmetrisch zur Z-Achse verkippen, so dass sich gleich große, entgegengesetzte Kraftanteile in Y-Richtung ergeben. Auf diese Weise wird auch das Spiel in Y-Richtung eliminiert.

Eine bevorzugte Ausgestaltung sieht entsprechend vor, dass die Komplexlichtquelle und der zweite Teil des Lichtmoduls mit Hilfe mehrerer Federn spielfrei verspannt werden.

Bevorzugt ist auch, dass der zweite Teil mit dem Halterahmen Referenzgeometrien für die Positionierung des Lichtmoduls im Scheinwerfer, für die Sekundäroptik, für die Komplexlichtquelle sowie optional für eine absorbierende und / oder reflektierende Blende aufweist. Damit können die Toleranzen zwischen den einzelnen optischen Bauteilen auf kleine Werte beschränkt werden.

## Patentansprüche

1. Scheinwerfer (10) für ein Kraftfahrzeug mit einem Gehäuse (14), wenigstens einer Licht für eine Hauptfunktion des Scheinwerfers erzeugenden Halbleiterlichtquelle (46), einem die Halbleiterlichtquelle in thermischer Kopplung berührenden Kühlkörper (48), einem Licht der Halbleiterlichtquelle sammelnden und richtenden optischen System, einem mit dem Gehäuse mechanisch verbundenen Halterahmen (20), der die Halbleiterlichtquelle mit dem Kühlkörper und das optische System in dem Gehäuse hält, und mit einer Schnittstelle zwischen einem eine Komplexlichtquelle bildenden ersten Teil (16), der wenigstens die Halbleiterlichtquelle und den Kühlkörper umfasst, und einem zweiten Teil (18), der wenigstens den Halterahmen (20) umfasst, wobei der erste Teil (16) an der Schnittstelle zerstörungsfrei lösbar mit dem zweiten Teil (20) verbunden ist, **dadurch gekennzeichnet, dass** der die Komplexlichtquelle bildende erste Teil (16) über die Halbleiterlichtquelle und den Kühlkörper hinaus wenigstens das Licht der Halbleiterlichtquelle sammelnde und richtende optische System (50) aufweist und dass der zweite Teil (18) des Lichtmoduls wenigstens eine erste Lagerstruktur aufweist, und der erste Teil (16) des Lichtmoduls wenigstens eine zweite Lagerstruktur aufweist, die zusammen ein Paar bilden, wobei die Lagerstrukturen so beschaffen sind, dass sie ineinander greifen, so dass beim Einbau der zweite Teil in den ersten Teil eingehängt wird und der eingehängte Teil um eine Schwenkachse (29) verschwenkt wird, und so dass beim Ausbau der zweite Teil zerstörungsfrei aus dem ersten Teil ausgehängt wird.

2. Scheinwerfer (10) nach Anspruch 1, **dadurch gekennzeichnet, dass** der zweite Teil (18) des Lichtmoduls wenigstens zwei erste Lagerstrukturen aufweist und der erste Teil (16) des Lichtmoduls wenigstens zwei zweite Lagerstrukturen aufweist, wobei jeweils eine erste Lagerstruktur und eine zweite Lagerstruktur zusammen ein Paar bilden, wobei die ersten und die zweiten Lagerstrukturen so beschaffen sind, dass die Lagerstrukturen eines Paars ineinander greifen, so dass der zweite Teil beim Einbau in den ersten Teil eingehängt und beim Ausbau aus dem ersten Teil ausgehängt wird, wobei der eingehängte Teil beim Einbau und beim Ausbau um eine Schwenkachse (29) herum verschwenkt wird.

3. Scheinwerfer (10) nach Anspruch 1 oder 2, **dadurch gekennzeichnet, dass** der Scheinwerfer ein Gehäuse mit einer Serviceöffnung (34) aufweist, die ab Werk offen ist, oder dass das Gehäuse dazu eingerichtet ist, im Reparaturfall in einem vorbestimmten Serviceöffnungsbereich aufgeschnitten zu werden, wobei das Scheinwerfergehäuse Geometrien für die Befestigung einer Abdeckung (38) aufweist, mit der die Serviceöffnung im Scheinwerfer nach dem Tausch der Komplexlichtquelle (16) wieder verschließbar ist, und wobei die Serviceöffnung von ihrer Größe und Lage her dazu eingerichtet ist, ein Einführen und Herausnehmen des ersten Teils eines Lichtmoduls (12) zu erlauben.

4. Scheinwerfer (10) nach einem der vorhergehenden Ansprüche, **dadurch gekennzeichnet, dass** der erste Teil (16) und der zweite Teil (18) zusammen ein Lichtmodul (12) bilden, das ein Projektionsmodul ist.

5. Scheinwerfer (10) nach Anspruch 4, **dadurch gekennzeichnet, dass** das Lichtmodul (12) eine zur Verstärkung eines Helligkeitsgradienten an einer Hell-Dunkel-Grenze der Lichtverteilung eingerichtete Blende (70) aufweist.

6. Scheinwerfer (10) nach Anspruch 5, **dadurch gekennzeichnet, dass** die Blende (70) eine Spiegelblende ist, die dazu eingerichtet ist, auf ihre Spiegelfläche einfallendes Licht der Halbleiterlichtquellen auf eine Sekundäroptik (72) des Projektionsmoduls zu richten.

7. Scheinwerfer (10) nach einem der Ansprüche 3 bis 6, **dadurch gekennzeichnet, dass** das optische System der Komplexlichtquelle alle optischen Bauelemente des Lichtmoduls (12) umfasst.

8. Scheinwerfer (10) nach Anspruch 7, **dadurch gekennzeichnet, dass** das Lichtmodul (12) ein Projektionsmodul ist und dass das optische System der Komplexlichtquelle eine Blende (70) sowie mindestens eine Sekundäroptik (72) umfasst.

9. Scheinwerfer (10) nach Anspruch 8, **dadurch gekennzeichnet, dass** die Sekundäroptik eine Projektionslinse oder ein Parabolspiegel ist.

10. Scheinwerfer (10) nach einem der vorhergehenden Ansprüche, **dadurch gekennzeichnet, dass** Einzelteile der Komplexlichtquelle lösbar miteinander verbunden sind.

11. Scheinwerfer (10) nach einem der vorhergehenden Ansprüche, **dadurch gekennzeichnet, dass** die Komplexlichtquelle mit lösbaren Befestigungselementen, beispielsweise mit Schrauben, Klinken, Riegel- oder Renkverschlüssen mechanisch mit dem Lichtmodul verbindbar ist, so dass die Komplexlichtquelle zerstörungsfrei vom übrigen Lichtmodul trennbar und austauschbar ist.

12. Scheinwerfer (10) nach Anspruch 11, **dadurch gekennzeichnet, dass** die Klinken, Riegel- oder Renkverschlüsse mindestens eine Feder (68, 84) aufweisen, die einen Riegel oder eine andere Renkgeometrie in ein Gegenstück presst, in dem ein Riegelelement (42) kraftschlüssig und/oder formschlüssig gehalten wird.

13. Scheinwerfer (10) nach einem der vorhergehenden Ansprüche, **gekennzeichnet durch** mehrere Federelemente (82, 84), die dazu eingerichtet sind, das erste Teil und das zweite Teil spielfrei miteinander zu verspannen.

## Claims

1. Headlamp (10) for a motor vehicle, having a housing (14), at least one semiconductor light source (46) which generates light for a main function of the headlamp, a heat sink (48) which contacts the semiconductor light source in thermal coupling, an optical system which collects and directs light from the semiconductor light source, and a holding frame (20) which is mechanically connected to the housing, which holds the semiconductor light source with the heat sink and the optical system in the housing, and comprising an interface between a first part (16) which forms a complex light source and comprises at least the semiconductor light source and the heat sink, and a second part (18) comprising at least the holding frame (20), the first part (16) being non-destructively detachably connected to the second part (20) at the interface, **characterized in that** the first part (16) forming the complex light source comprises, beyond the semiconductor light source and the heat sink, at least the light of the semiconductor light source collecting and directing optical system (50) and **in that** the second part (18) of the light module comprises at least a first bearing structure and the first part (16) of the light module comprises at least a second bearing structure, which together form a pair, the bearing structures being adapted to engage one another so that upon installation the second part is hinged into the first part and the hinged part is pivoted about a pivot axis (29), and so that upon removal the second part is non-destructively hinged off from the first part.

2. Headlamp (10) according to claim 1, **characterized in that** the second part (18) of the light module has at least two first bearing structures and the first part (16) of the light module has at least two second bearing structures, in each case a first bearing structure and a second bearing structure together forming a pair, wherein the first and second bearing structures are such that the bearing structures of a pair engage one another so that the second part is hinged into in the first part during installation and is hinged off from the first part during removal, wherein the hinged part is pivoted about a pivot axis (29) during installation and removal.

3. Headlamp (10) according to claim 1 or 2, **characterized in that** the headlight comprises a housing having a service opening (34) which is open ex works, or **in that** the housing is adapted to be cut open in a predetermined service opening range in the event of repair, wherein the headlight housing has geometries for mounting a cover (38) with which the service opening in the headlight can be closed again after the complex light source (16) has been replaced, and wherein the service opening is adapted in size and location to permit insertion and removal of the first part of a light module (12).

4. Headlamp (10) according to one of the preceding claims, **characterized in that** the first part (16) and the second part (18) together form a light module (12) which is a projection module.

5. Headlamp (10) according to Claim 4, **characterized in that** the light module (12) has a shade (70) which is set up to amplify a brightness gradient at a light/dark boundary of the light distribution.

6. Headlamp (10) according to claim 5, **characterized in that** the shade (70) is a mirror shade adapted to direct light of semiconductor light sources incident on its mirror surface onto a secondary optics (72) of the projection module.

7. Headlamp (10) according to one of claims 3 to 6, **characterized in that** the optical system of the complex light source comprises all the optical components of the light module (12).

8. Headlamp (10) according to claim 7, **characterized in that** the light module (12) is a projection module and **in that** the optical system of the complex light source comprises a shade (70) and at least one secondary optics (72).

9. Headlamp (10) according to claim 8, **characterized in that** the secondary optics is a projection lens or a parabolic mirror.

10. Headlight (10) according to one of the preceding claims, **characterized in that** individual parts of the complex light source are detachably connected to one another.

11. Headlamp (10) according to one of the preceding claims, **characterized in that** the complex light source can be mechanically connected to the light module with detachable fastening elements, for example with screws, latches, bolt or bayonet locks, so that the complex light source can be non-destructively separated from the rest of the light module and exchanged.

12. Headlamp (10) according to claim 11, **characterized in that** the latches, bolts or articulated latches have at least one spring (68, 84) which presses a bolt or another bayonet geometry into a counterpart in which a bolt element (42) is held force-fitting and/or form-fitting.

13. Headlamp (10) according to one of the preceding claims, **characterized by** a plurality of spring elements (82, 84) which are arranged to clamp the first part and the second part together without play.

## Revendications

1. Phare (10) pour véhicule automobile, avec un boîtier (14), au moins une source de lumière à semi-conducteur (46) produisant de la lumière pour une fonction principale du phare, un dissipateur de chaleur (48) en contact par couplage thermique avec la source de lumière à semi-conducteur, un système optique collectant et dirigeant de la lumière issue de la source de lumière à semi-conducteur, un cadre de retenue (20) relié mécaniquement au boîtier et retenant la source de lumière à semi-conducteur ainsi que le dissipateur de chaleur et le système optique au sein du boîtier, et avec une interface entre une première partie (16), formant une source de lumière complexe et incluant au moins la source de lumière à semi-conducteur et le dissipateur de chaleur, et une seconde partie (18) incluant au moins le cadre de retenue (20), la première partie (16) étant reliée de manière amovible et non destructive à la seconde partie (20) au niveau de l'interface, **caractérisé en ce que** la première partie (16) formant la source de lumière complexe comprend, outre la source de lumière à semi-conducteur et le dissipateur de chaleur, au moins le système optique (50) collectant et dirigeant de la lumière issue de la source de lumière à semi-conducteur, et **en ce que** la seconde partie (18) du module d'éclairage présente au moins une première structure porteuse, et la première partie (16) du module d'éclairage présente au moins une seconde structure porteuse, lesdites structures formant ensemble une paire, les structures porteuses étant conçues de telle manière qu'elles viennent en prise l'une avec l'autre, de sorte que, lors de la mise en place, la seconde partie est accrochée dans la première partie et la partie accrochée est pivotée autour d'un axe de pivotement (29), et de sorte que, lors du démontage, la seconde partie est décrochée de la première partie de manière non-destructive.

2. Phare (10) selon la revendication 1, **caractérisé en ce que** la seconde partie (18) du module d'éclairage présente au moins deux premières structures porteuses et la première partie (16) du module d'éclairage présente au moins deux secondes structures porteuses, une première et une seconde structures porteuses respectives formant ensemble une paire, les premières et secondes structures porteuses étant conçues de telle manière que les structures porteuses d'une paire viennent en prise l'une avec l'autre de sorte que la seconde partie est accrochée dans la première partie lors de la mise en place et est décrochée de la première partie lors du démontage, la partie accrochée pivotant autour d'un axe de pivotement (29) lors de la mise en place et du démontage.

3. Phare (10) selon la revendication 1 ou 2, **caractérisé en ce que** le phare présente un boîtier muni d'une ouverture de service (34) ouverte au départ de l'usine, ou **en ce que** le boîtier est conçu pour être découpé dans une zone d'ouverture de service prédéterminée en cas de réparation, le boîtier de phare présentant des géométries destinées à la fixation d'un cache (38) grâce auquel l'ouverture de service du phare peut être à nouveau refermée après le remplacement de la source lumineuse complexe (16), et l'ouverture de service, de par sa taille et sa position, étant conçue pour permettre une insertion et un retrait de la première partie d'un module d'éclairage (12).

4. Phare (10) selon l'une quelconque des revendications précédentes, **caractérisé en ce que** la première partie (16) et la seconde partie (18) forment ensemble un module d'éclairage (12) qui est un module de projection.

5. Phare (10) selon la revendication 4, **caractérisé en ce que** le module de lumière (12) présente un diaphragme (70) conçu pour renforcer un gradient de luminosité au niveau d'une limite clair-obscur de la répartition de lumière.

6. Phare (10) selon la revendication 5, **caractérisé en ce que** le diaphragme (70) est un diaphragme à miroir qui est conçu pour diriger de la lumière des sources de lumière à semi-conducteur impactant sa surface de miroir vers une optique secondaire (72) du module de projection.

7. Phare (10) selon l'une quelconque des revendications 3 à 6, **caractérisé en ce que** le système optique de la source de lumière complexe inclut tous les composants optiques du module de lumière (12).

8. Phare (10) selon la revendication 7, **caractérisé en ce que** le module d'éclairage (12) est un module de projection et **en ce que** le système optique de la source de lumière complexe inclut un diaphragme (70) ainsi qu'au moins une optique secondaire (72).

9. Phare (10) selon la revendication 8, **caractérisé en ce que** l'optique secondaire est une lentille de projection ou un miroir parabolique.

10. Phare (10) selon l'une quelconque des revendications précédentes, **caractérisé en ce que** des parties individuelles de la source de lumière complexe sont reliées les unes avec les autres de manière amovible.

11. Phare (10) selon l'une quelconque des revendications précédentes, **caractérisé en ce que** la source de lumière complexe peut être reliée mécaniquement au module d'éclairage grâce à des éléments de fixation amovibles, par exemple avec des vis, des cliquets, des loquets ou des verrous quart-de-tour, de sorte que la source de lumière complexe peut être séparée du reste du module d'éclairage et échangée de manière non destructive.

12. Phare (10) selon la revendication 11, **caractérisé en ce que** les cliquets, loquets ou verrous quart-de-tour présentent au moins un ressort (68, 84) qui presse un loquet ou une autre géométrie de verrouillage dans une contrepièce au sein de laquelle un élément de verrouillage (42) est retenu par complémentarité de force et/ou de forme.

13. Phare (10) selon l'une quelconque des revendications précédentes, **caractérisé par** une pluralité d'éléments formant ressort (82, 84) conçus pour caler la première partie et la seconde partie l'une avec l'autre sans présence de jeu.
